# EUROPEAN PATENT SPECIFICATION

(11) **EP 1 338 834 B1**
(45) Date of publication and mention of the grant of the patent: **06.07.2005**
(21) Application number: 02008967.8
(22) Date of filing: 22.04.2002
(51) Int. Cl.: F16K 11/20, F16K 11/12

(54) **A hydraulic control valve used for firewood splitter**
Hydrauliksteuerventil für einen Holzspalter
Vanne de commande hydraulique pour un fendeur de bois

(30) Priority: 21.02.2002 CN 02212965 U
(43) Date of publication of application: 27.08.2003
(73) Proprietor: Laizhou Hardware Machinery Co., Ltd., Laizhou City, Shandong Province 261 411 (CN)
(72) Inventor: Zhang, Tongqiang, Laizhou City, Shandong Province 261 411 (CN)
(74) Representative: Reinhard - Skuhra - Weise & Partner

(56) References cited:
- DE-A- 19 716 641
- FR-A- 2 592 455
- US-A- 2 221 462
- US-A- 3 773 076

## Description

### Technical field :

This application relates to the component used for timber processing machinery, in particular, a hydraulic control valve used for firewood splitter.

### Technical background:

With the existing technology, the publicly known technology is the patent this applicant has applied for and the patent with the patent CN No 012437948 granted by the State Intellectual Property Office, which involves a firewood splitter control valve by use of a single hand lever. However, in some cases, simultaneous and/or separate control of the two hand levers by two hands is required to operate the firewood splitter, which can not be solved with the existing technology.

Furthermore, document US-A-2 221 462 discloses the firewood splitter hydraulic control valve including a valve body, a valve bush, an oil feed channel and an oil return channel inside said valve body.

### Contents of invention:

This application is a technical scheme of a hydraulic control va' e used for firewood splitter to overcome the shortcomings of the existing technology, with which simultaneous and/or separate control of two hand levers by two hands can be effected to operate the firewood splitter.

This technical proposal is realized through the following technical measures it mainly consists of hand lever, hand lever holder with reset spring for fixing hand lever and valve core, valve body with valve core inside, valve bush as well as oil feed channel, oil return channel, cylinder oil feed channel cylinder oil return channel inside valve body, characteristics of this invention are: two of the said hand levers, hand lever holders and valve cores are each provided, in other words, the left hand lever holders are used to fix the left hand levers and the left valve cores while the right hand lever holders are used to fix the right hand levers and the right valve cores, and the said left valve cores and right valve cores are encased and fixed in the valve bush, the lower left oil port on the valve bush corresponds with the oil return channel, and the lower right oil port corresponds with the oil feed channel, the left horizontal oil port of the valve bush corresponds with the cylinder oil feed channel, the right horizontal oil port of the valve bush corresponds with the cylinder oil return channel, in addition, auxiliary oil return channel is provided on the valve body to correspond with the upper oil port of the valve bush; a left valve core and a right valve core are provided in the said valve bush, and the right valve core is encased and fixed outside of front portion of the left valve core, oil chamber is formed between the inside chamber of right valve core and the left valve core, the center oil chamber of the left valve core is interconnected with the oil chamber on the axis of the left valve core; in reset mode of the two valve cores, the lower left oil port on the left valve core that is interconnected with the center oil chamber of the left valve core corresponds with the lower left oil port on the valve bush, and the lower middle oil port of the left valve core corresponds with the lower right oil port of the valve bush, the lower right oil port of the left valve core corresponds with the lower oil port of the right valve core, the horizontal oil port of the left valve core corresponds with the horizontal oil port of the right valve core and with the right horizontal oil port of the valve bush as well, the upper oil port of the right valve core that is interconnected with the oil chamber corresponds with the upper oil port of the valve bush, in addition, when the two valve cores are in working mode, the said lower right oil port of the left valve core and the lower oil port of the right valve core simultaneously correspond with the left horizontal oil port of the valve bush. Other specific characteristics of this technical proposal include: the outer axes face at the lower middle oil port of the left valve core has oil groove which is closed by the lower middle oil port of the left valve core. And overflow valve is provided between the said oil feed channel and the oil return channel.

Benefits of this technical proposal can be known from the above description of the proposal, since in this technical proposal, there are two sets of mutually independent hand lever, hand lever holder and valve core, in other words, the left hand lever holder holds the left hand lever and the left valve core while the right hand lever holder holds the right hand lever and the right valve core, rotation of left and right hand levers can cause the left and right valve cores to revolve, the said left and right valve cores are encased and fixed in the valve bush, five oil ports are provided on the valve bush, which are respectively corresponding to oil return channel, oil feed channel, cylinder oil feed channel, cylinder oil return channel as well as the auxiliary oil return channel. Several oil ports are provided both on the left and right valve cores, which are respectively corresponding to the oil ports on each valve bush, so as to control the high pressure hydraulic oil to enter the cylinder, making the firewood splitter to work, or prevent the pressurized oil form entering the cylinder, causing the firewood splitter to be inactive, making dual hand lever operation of the firewood splitter possible. Specific control procedures are as follows: When the two hand levers go upward as the result of action by the reset spring, the left and right valve cores are in reset mode when the left and right valve cores close the left horizontal oil port of the valve bush and the cylinder oil feed channel, and no pressurized oil enters the oil cylinder, and the firewood splitter can not move, pressurized oil enters through the oil feed channel and flows through the lower right oil port of the valve bush, the lower middle oil port of the left valve core, the center oil chamber of the left valve core, the lower left oil port of the left valve core as well as the lower left oil port of the valve bush and returns to oil tank through the oil return channel, in the mean time, the oil can also flow back to the oil tank through the center oil chamber of the left valve core, the oil chamber, the upper oil port of the right valve core, the upper oil port of the valve bush as well as the auxiliary oil return channel; the pressurized oil inside the cylinder flows through cylinder oil return channel, the right horizontal oil port of the valve bush, the horizontal oil port of the right valve core, the horizontal oil port of the left valve core as well as the center oil chamber of the left valve core and returns to the oil tank via the oil return channel, it can also flow back to the oil tank through the center oil chamber of the left valve core and the auxiliary oil return channel. When the two hand levers are pressed down simultaneously, the left and right valve cores are in working mode, the left valve core closes the lower left oil port of the valve bush and the right valve core closes the upper and right horizontal oil ports of the valve bush, the pressurized oil enters through the oil feed channel and flows into the center oil chamber of the left valve core through the lower right oil port of the valve bush, oil groove and lower middle oil port of the left valve core, and from there, the pressurized oil flows through the lower right oil port of the left valve core, the lower oil port of the right valve core, the left horizontal oil port of the valve bush and returns to the cylinder oil feed channel via the cylinder oil feed channel, which makes the firewood splitter to work. When the left hand lever is pressed down and the right hand lever is in reset mode, the right valve core closes the left horizontal oil port of the valve bush and the cylinder oil feed channel, preventing the pressurized oil from entering the oil cylinder, in the meantime, the left valve core closes the horizontal oil port of the right valve core, the right horizontal oil port of the valve bush, the cylinder oil return channel as well as the lower left oil port of the valve bush, preventing the oil cylinder from returning oil and the piston inside the cylinder can not move, the firewood splitter is inactive, at this time, the pressurized oil enters the center oil chamber of the left valve core and flows back to the oil tank through the auxiliary oil return channel. When the left hand lever is in reset mode and the right hand lever is pressed down, the left valve core closes the lower oil port of the right valve core, the left horizontal oil port of the valve bush as well as the cylinder oil feed channel, preventing the pressurized oil from entering the cylinder, in the mean time, the right valve core closes the right horizontal oil port of the valve bush and the cylinder oil return channel, preventing the pressurized oil inside the cylinder from back flowing, it also closes the upper oil port of the valve bush and the auxiliary oil return channel, which makes the pressurized oil to enter the center oil chamber of the left valve core and flow back to the oil tank via the oil return channel. From the above description of the control procedures, one can conclude that different positions of the two hand levers controls the firewood splitter to work, reset or to be static Thus it can be seen that there exist substantial uniqueness and progress with this utility model if compared to the existing technology, and that its benefits are obvious.

### Description of the attached drawings:

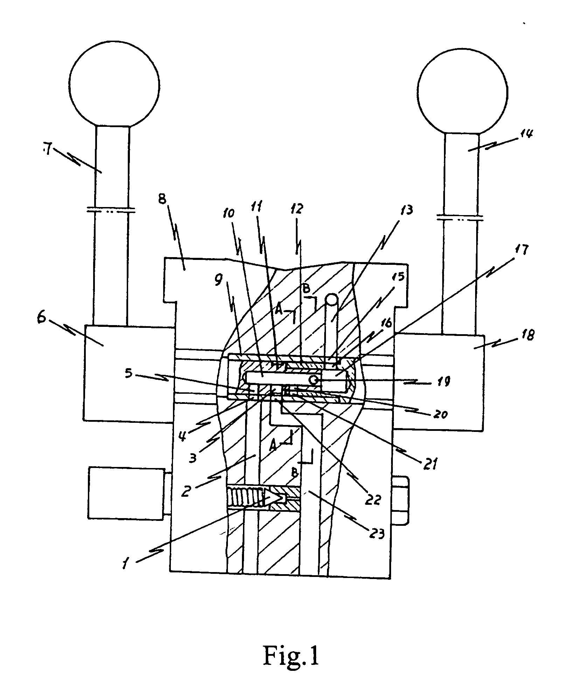

Figure 1 is a partial structure cutaway drawing intended to show specific implementation measures of this utility model

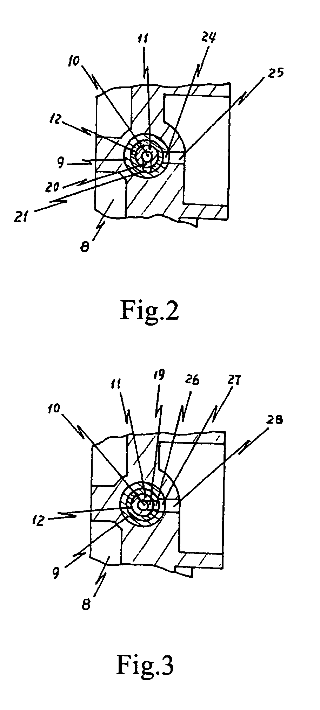

Figure 2 is a structure cutaway drawing for Figure 1 in View A - A
Figure 3 is a structure cutaway drawing for Figure 1 in View B - B

In the drawings, 1 - overflow valve, 2 - oil return channel, 3 - lower middle oil port of left valve core, 4 - lower left oil port of valve bush, 5 - lower left oil port of left valve core, 6 - left hand lever holder, 7 - left hand lever, 8 - valve body, 9 - valve bush, 10 - center oil chamber of left valve core, 11 - left valve core, 12 - right valve core, 13 - auxiliary oil return channel, 14 - right hand lever, 15 - upper oil port of valve bush, 16 - upper oil port of right valve core, 17 - oil chamber, 18 - right hand lever holder, 19 - horizontal oil port of left valve core, 20 - lower right oil port of left valve core, 21 - lower oil port of right valve core, 22 - lower right oil port of valve bush, 23 - oil feed channel, 24 - left horizontal oil port of valve bush, 25 - cylinder oil feed channel, 26 - horizontal oil port of right valve core, 27 - right horizontal oil port of valve stand, and 28 - cylinder oil return channel.

### Description of the preferred embodiment:

To clearly demonstrate the technical characteristics of this invention, explanation is given below by incorporating an exemplary implementation measure in conjunction with drawings attached.

It can be seen from the attached drawings that the hydraulic control valve used for firewood splitter covered by this invention mainly consists of two hand levers, two hand lever holders with reset spring for fixing hand levers and two valve cores, valve body 8 with valve core inside, valve bush 9 as well as oil feed channel 23, oil return channel 2, cylinder oil feed channel 25, cylinder oil return channel 28 inside valve body 8, wherein, the left hand lever holder 6 is used to fix the left hand lever 7 and the left valve core 11 while the right hand lever holder 18 is used to fix the right hand lever 14 and the right valve core 12, and the said left valve core 11 and right valve core 12 are encased and fixed in the valve bush 9, the lower left oil port 4 on the valve bush 9 corresponds with the oil return channel 2, the lower right oil port 22 of the valve bush corresponds with the oil feed channel 23, the left horizontal oil port 24 of the valve bush corresponds with cylinder oil feed channel 25, the right horizontal oil port 27 of the valve bush corresponds with the cylinder oil return channel 28, in addition, auxiliary oil return channel 13 is provided on the valve body 8 to correspond with the upper oil port 15 on the valve bush 9; a left valve core 11 and a right valve core 12 are provided in the said valve bush 9, and the right valve core 12 is encased and fixed outside of front portion of the left valve core 11, oil chamber 17 is formed between the inside chamber of right valve core 12 and the left valve core 11, the center oil chamber 10 of the left valve core is interconnected with the oil chamber 17 on the axis of the left valve core 11; in reset mode of the two valve cores, the lower left oil port 5 on the left valve core 11 that is interconnected with the center oil chamber 11 of the left valve core corresponds with the lower left oil port 4 on the valve bush, and the lower middle oil port 3 of the left valve core corresponds with the lower right oil port 22 of the valve bush, in the mean time, the outer axes face of the left valve core 11 at its the lower middle oil port 3 has oil groove which is closed by the lower middle oil port of the left valve core, this ensures that, no matter how the left valve core 11 rotates, the pressurized oil entered through the lower middle oil port 22 of the valve bush can flow through the oil groove and into the lower middle oil port 3 of the left valve core, the lower right oil port 20 of the left valve core corresponds with the lower oil port 21 of the right valve core 12, the horizontal oil port 19 of the left valve core corresponds with the horizontal oil port 26 of the right valve core and with the right horizontal oil port 27 of the valve bush as well, the upper oil port 16 of the right valve core 12 that is interconnected with the oil chamber 17 corresponds with the upper oil port 15 of the valve bush, in addition, when the two valve cores are in working mode, the said lower right oil port 20 of the left valve core corresponds with the lower oil port 21 of the right valve core and with the left horizontal oil port 24 of the valve bush as well. Finally, an overflow valve 1 is provided between the said oil feed channel 23 and the oil return channel 2 so as to ensure that the pressurized oil pressure does not exceed the pressure required and the oil pressure is stabilized.

## Claims

1. A firewood splitter hydraulic control valve, comprising:
two hand levers, two hand lever holders with reset spring for fixing the hand levers and two valve cores, valve body (8) with the valve cores inside, valve bush (9) as well as oil feed channel (23), oil return channel (2), cylinder oil feed channel (25), cylinder oil return channel (28) inside the valve body (8), wherein a left hand lever holder (6) is used to fix a left hand lever (7) and a left valve core (11) while a right hand lever holder (18) is used to fix a right hand lever (14) and a right valve core (12), and the said left valve core (11) and right valve core (12) are encased and fixed in the valve bush (9), a lower left oil port (4) on the valve bush (9) corresponds with the oil return channel (2), and a lower right oil port (22) on the value bush corresponds with the oil feed channel (23), a left horizontal oil port (24) of the valve bush (9) corresponds with the cylinder oil feed channel (25), a right horizontal oil port (27) of the valve bush (9) corresponds with the cylinder oil return channel (28), in addition, auxiliary oil return channel (13) is provided on the valve body (8) to correspond with an upper oil port (15) of the valve bush (9), and the right valve core (12) is encased and fixed outside of front portion of the left valve core (11), oil chamber (17) is formed between an inside chamber of the right valve core (12) and the left valve core (11), a center oil chamber (10) of the left valve core (11) is interconnected with the oil chamber (17) on the axis of the left valve core (11); in reset mode of the two valve cores, a lower left oil port (5) on the left valve core (11) that is interconnected with the center oil chamber (10) of the left valve core (11) corresponds with the lower left oil port (4) on the valve bush (9), and a lower middle oil port (3) of the left valve core (11) corresponds with the lower right oil port (22) of the valve bush (9), the lower right oil port (20) of the left valve core (11) corresponds with the lower oil port (21) of the right valve core (12), the horizontal oil port (19) of the left valve core (11) corresponds with a horizontal oil port (26) of the right valve core (12) and with the right horizontal oil port (27) of the valve bush (9) as well, a upper oil port (16) of the right valve core (12) that is interconnected with the oil chamber (17) corresponds with the upper oil port (15) of the valve bush (9), in addition, when the two valve cores are in working mode, the said lower right oil port (20) of the left valve core (11) and the lower oil port (21) of the right valve core (12) simultaneously correspond with the left horizontal oil port (24) of the valve bush (9).

2. The firewood splitter hydraulic control valve according to claim 1, wherein the overflow valve (1) is provided between said oil feed channel (23) and the oil return channel (2).

## Patentansprüche

1. Hydrauliksteuerventil fur einen Feuerholzspalter, bestehend aus:
zwei Handhebeln (7, 14), zwei Handhebelhalter (6, 18) mit einer Rückstellfeder zur Fixierung der Handhebel und zwei Ventileinsatze (11, 12), einem Ventilkorper (8) mit den Ventileinsatzen (11, 12) im Inneren, einer Ventilbuchse (9) sowie einem Ölzuführkanal (23), einem Ölrückführkanal (2) im Inneren des Ventilkörpers (8);
wobei ein linker Handhebelhalter (6) zur Befestigung eines linken Handhebels (7) und eines linken Ventileinsatzes (11) verwendet ist, wahrend ein rechter Handhebelhalter (18) zur Befestigung eines rechten Handhebels (14) und eines rechten Ventileinsatzes (12) verwendet ist, und wobei der linke Ventileinsatz (11) und der rechte Ventileinsatz (12) eingekapselt und in der Ventilbuchse (9) befestigt sind, wobei eine untere linke Ölöffnung (4) der Ventilbuchse (9) mit dem Ölrückführkanal (2) korrespondiert und eine untere rechte Ölöffnung (22) an der Ventilbuchse mit dem Ölzuführkanal (23) korrespondiert, wobei eine linke horizontale Ölöffnung (24) der Ventilöffnung (9) mit dem Zylinderölzufuhrkanal (25) korrespondiert, wobei eine rechte horizontale Öloffnung (27) der Ventilbuchse (9) mit dem Zylinderölrückfuhrkanal (28) korrespondiert, wobei zusatzlich ein Hilfsölruckführkanal (13) auf dem Ventilkörper (8) fur das Korrespondieren mit einer oberen Ölöffnung (15) der Ventilbuchse (9) vorgesehen ist, und wobei der rechte Ventileinsatz (12) eingekapselt und außerhalb eines vorderen Abschnitts des linken Ventileinsatzes (11) befestigt ist, wobei eine Ölkammer (17) zwischen einer Innenkammer des rechten Ventileinsatzes (12) und des linken Ventileinsatzes (11) gebildet ist, wobei eine mittige Ölkammer (10) des linken Ventileinsatzes (11) mit der Ölkammer (17) auf der Achse des linken Ventileinsatzes (11) verbunden ist;
wobei im Rückstellmodus der beiden Ventileinsätze eine untere linke Ölöffnung (5) auf dem linken Ventileinsatz (11), die mit der mittigen Ölkammer (10) des linken Ventileinsatzes (11) mit der Ölkammer (17) auf der Achse verbunden ist, mit der unteren linken Ölöffnung (4) der Ventilbuchse (9) korrespondiert, und wobei eine untere mittlere Ölöffnung (3) des linken Ventileinsatzes (11) mit der unteren rechten Ölöffnung (22) der Ventilbuchse (9) korrespondiert, wobei die untere rechte Ölöffnung (20) des linken Ventileinsatzes (11) mit der unteren Ölöffnung (21) des rechten Ventileinsatzes (12) korrespondiert, wobei die horizontale Ölöffnung (19) des linken Ventileinsatzes (11) mit einer horizontalen Ölöffnung (26) des rechten Ventileinsatzes (12) korrespondiert und ebenso mit der rechten horizontalen Ölöffnung (27) der Ventilbuchse (9), wobei eine obere Ölöffnung (16) des rechten Ventileinsatzes (12), die mit der Ölkammer (17) verbunden ist, mit der oberen Ölöffnung (15) der Ventilbuchse (9) korrespondiert;
wobei zusatzlich, wenn die beiden Ventileinsatze sich in ihrer Arbeitsstellung befinden, die untere rechte Ölöffnung (20) des linken Ventileinsatzes (11) und in die untere Öloffnung (21) des rechten Ventileinsatzes (12) gleichzeitig mit der linken horizontalen Oloffnung (24) der Ventilbuchse (9) korrespondieren.

2. Hydraulikventil fur einen Feuerholzspalter nach Anspruch 1, bei dem ein Uberstromventil (1) zwischen dem Ölzufuhrkanal (23) und dem Ölrückführkanal (2) vorgesehen ist.

## Revendications

1. Soupape de commande hydraulique pour fendeuse de bois de chauffage, comprenant :
deux leviers à main, deux supports de levier à main avec ressort de rappel pour fixer les leviers à main, et deux noyaux de soupape ; un corps de soupape (8) comportant, à l'intérieur, les noyaux de soupape, un manchon de soupape (9) ainsi qu'un passage d'amenée d'huile (23), un passage de retour d'huile (2), un passage d'amenée d'huile de cylindre (25), un passage de retour d'huile de cylindre (28) à l'intérieur du corps de soupape (8), dans laquelle un support de levier gauche (6) est utilisé pour un levier gauche (7) et un noyau gauche de soupape (11), tandis qu'un support de levier droit (18) est utilisé pour fixer un levier droit (14) et un noyau droit de soupape (12), et ledit noyau gauche de soupape (11) et ledit noyau droit de soupape (12) sont encastrés et fixés dans le manchon de soupape (9), un orifice inférieur gauche d'huile (4) situé sur le manchon de soupape (9) correspond avec le passage de retour d'huile (2) et un orifice inférieur droit d'huile (22) situé sur le manchon de soupape (9) correspond avec le passage d'amenée d'huile (23), un orifice horizontal gauche d'huile (24) du manchon de soupape (9) correspond avec le passage d'amenée d'huile de cylindre (25), un orifice horizontal droit d'huile (27) du manchon de soupape (9) correspond avec le passage de retour d'huile de cylindre (28), et dans laquelle il est en outre prévu un passage auxiliaire de retour d'huile (13) sur le corps de soupape (8) pour correspondre avec un orifice supérieur d'huile (15) du manchon de soupape (9), et le noyau droit de soupape (12) est encastré et fixé à l'extérieur d'une partie frontale du noyau gauche de soupape (11), et une chambre d'huile (17) est formée entre une chambre intérieure du noyau droit de soupape (12) et le noyau gauche de soupape (11), une chambre centrale d'huile (10) du noyau gauche de soupape (11) est en communication mutuelle avec la chambre d'huile (17) sur l'axe du noyau gauche de soupape (11) ; dans laquelle, dans le mode de remise à l'état initial des deux noyaux de soupape, un orifice inférieur gauche d'huile (5), situé sur le noyau gauche de soupape (11), qui est en communication mutuelle avec la chambre centrale d'huile (10) du noyau gauche de soupape (11), correspond avec l'orifice inférieur gauche d'huile (4) situé sur le manchon de soupape (9), et un orifice inférieur médian d'huile (3) du noyau gauche de soupape (11) correspond avec l'orifice inférieur droit d'huile (22) du manchon de soupape (9), l'orifice inférieur droit d'huile (20) du noyau gauche de soupape (11) correspond avec l'orifice inférieur d'huile (21) du noyau droit de soupape (12), l'orifice horizontal d'huile (19) du noyau gauche de soupape (11) correspond avec un orifice horizontal d'huile (26) du noyau droit de soupape (12) et également avec l'orifice horizontal droit d'huile (27) du manchon de soupape (9), un orifice supérieur d'huile (16) du noyau droit de soupape (12), qui est en communication réciproque avec la chambre d'huile (17), correspond avec l'orifice supérieur d'huile (15) du manchon de soupape (9) et, en outre, lorsque les deux noyaux de soupape sont en mode de fonctionnement, ledit orifice inférieur droit d'huile (20) du noyau gauche de soupape (11) et l'orifice inférieur d'huile (21) du noyau droit de soupape (12) correspondent simultanément avec l'orifice horizontal gauche d'huile (24) du manchon de soupape (9).

2. Soupape de commande hydraulique pour fendeuse de bois de chauffage selon la revendication 1, dans laquelle la soupape de trop-plein (1) est située entre ledit passage d'amenée d'huile (23) et le passage de retour d'huile (2).
